# EUROPEAN PATENT APPLICATION

(11) **EP 4 738 865 A1**
(43) Date of publication of application: **06.05.2026**
(21) Application number: 24849633.3
(22) Date of filing: 01.08.2024
(51) Int. Cl.: H04N 23/68, H04N 23/81, G06T 5/80, G06T 5/70, G06T 5/73

(54) **ELECTRONIC DEVICE FOR PERFORMING IMAGE CORRECTION AND OPERATION METHOD THEREFOR**

(30) Priority: 02.08.2023 KR 20230100887; 19.09.2023 KR 20230124802
(71) Applicant: Samsung Electronics Co., Ltd., Suwon-si, Gyeonggi-do 16677 (KR)
(72) Inventor: LEE, Heungsu, Suwon-si Gyeonggi-do 16677 (KR); JANG, Hyosik, Suwon-si Gyeonggi-do 16677 (KR); YEO, Dongwon, Suwon-si Gyeonggi-do 16677 (KR); CHOI, Wonchul, Suwon-si Gyeonggi-do 16677 (KR)
(74) Representative: Nederlandsch Octrooibureau
(86) International application number: PCT/KR2024/011318
(87) International publication number: WO 2025/029066

(57) **Abstract**

An electronic device according to an embodiment may comprise: a camera module including a lens assembly; a motion sensor for detecting the movement of the electronic device; and at least one processor electrically connected to the camera module and the motion sensor. The at least one processor may: acquire a raw image including a plurality of pixels from the camera module; correct first lens shading by applying, to the raw image, a first LSC table to which first gain values respectively corresponding to the plurality of pixels have been allocated; generate a first corrected image to which video digital image stabilization (VDIS) correction has been applied on the basis of the movement of the electronic device; correct second lens shading by applying, to the first corrected image, a second LSC table to which second gain values corresponding to at least some of the plurality of pixels have been allocated; and generate a second corrected image to which the second lens shading correction has been applied.

## Description

### [Technical Field]

Various embodiments of the disclosure relate to an electronic device that performs image correction and an operation method thereof.

### [Background Art]

An electronic device including a camera may process digital data obtained via an image sensor to provide an enhanced image. Some examples of various processing techniques to enhance an image may include lens shading correction (LSC) and video digital image stabilization (VDIS) correction.

Lens shading correction is for compensating for a phenomenon in which an image or video becomes darker toward its periphery due to optical characteristics of a lens. Specifically, lens shading correction may apply different gain values to the center and peripheral parts of an image frame to balance the entire image frame.

Video digital image stabilization correction is for reducing distortion due to shaking when the electronic device (camera) shakes. Specifically, based on the shake information of the electronic device, the video digital image stabilization correction may determine a crop area in an image, and remove a peripheral part of an image frame to remove an area with camera shake.

### [Disclosure of Invention]

### [Solution to Problem]

An electronic device according to an embodiment may include a camera module including a lens assembly, a motion sensor configured to detect a movement of the electronic device, and at least one processor electrically connected to the camera module and the motion sensor. The at least one processor according to an embodiment may be configured to obtain a raw image including a plurality of pixels from the camera module, perform first lens shading correction by applying, to the raw image, a first LSC table in which first gain values corresponding to the plurality of pixels respectively are allocated, and based on a movement of the electronic device, generate a first corrected image which has been subjected to video digital image stabilization (VDIS) correction. The at least one processor according to an embodiment may be configured to perform second lens shading correction by applying, to the first corrected image, a second LSC table in which second gain values corresponding to at least some of the plurality of pixels are allocated, and generate a second corrected image which has been subjected to the second lens shading correction.

An operation method of an electronic device according to an embodiment may include an operation of obtaining a raw image including a plurality of pixels from the camera module, an operation of performing first lens shading correction by applying, to the raw image, a first LSC table in which first gain values corresponding to the plurality of pixels respectively are allocated, and an operation of, based on a movement of the electronic device, generating a first corrected image which has been subjected to video digital image stabilization (VDIS) correction. The operation method of the electronic device according to an embodiment may include an operation of performing second lens shading correction by applying, to the first corrected image, a second LSC table in which second gain values corresponding to at least some of the plurality of pixels are allocated and an operation of generating a second corrected image which has been subjected to the second lens shading correction.

### [Brief Description of Drawings]

FIG. 1 is a block diagram of an electronic device in a network environment according to various embodiments.
FIG. 2 is a block diagram of a camera module according to various embodiments.
FIG. 3 is a diagram illustrating lens shading correction according to an embodiment.
FIG. 4 is a diagram illustrating video digital image stabilization correction according to an embodiment.
FIG. 5 is a flowchart of an operation method of an electronic device according to an embodiment.
FIG. 6 is a flowchart of a pre-processing process in second lens shading correction according to an embodiment.
FIG. 7 is a flowchart of an operation method of an electronic device according to an embodiment.
FIG. 8 is a detailed flowchart of second lens shading correction according to an embodiment.
FIG. 9 is a diagram illustrating a process of generating a second LSC table according to an embodiment.
FIG. 10 illustrates an example in which first lens shading correction, VDIS correction, and second lens shading correction are sequentially processed in an electronic device according to an embodiment.

### [Mode for the Invention]

In the following description, preferred embodiments of the disclosure will be described in detail with reference to the accompanying drawings. The merits and features of the disclosure, and a method of achieving the same will become apparent from the following detailed description of the embodiments given in conjunction with the accompanying drawings. However, the disclosure is not limited to the embodiments disclosed below, but may be implemented in various different forms, and the embodiments are provided to make the disclosure complete, and to fully inform a person skilled in the art to which the disclosure pertains of the scope of the disclosure, and the disclosure is defined by the scope of the claims. Throughout the specification, the same reference numerals refer to the same components.

Unless otherwise defined, all terms (including technical and scientific terms) used in the specification shall be interpreted as having the meaning that is commonly understood by a person with ordinary skill in the art to which the disclosure pertains. In addition, the terms defined in the dictionary that are generally used are not interpreted in an ideal or excessive manner unless they are clearly and specially defined in the disclosure. The terms used in the specification are for the purpose of describing embodiments, and are not intended to limit the disclosure. Unless otherwise specified in the description, a singular form includes a plural form.

In the specification, the terms "comprises" and/or "comprising" used with a component, operation, and operation and/or element that are mentioned do not preclude the presence or addition of one or more other components, operations, operations and/or elements.

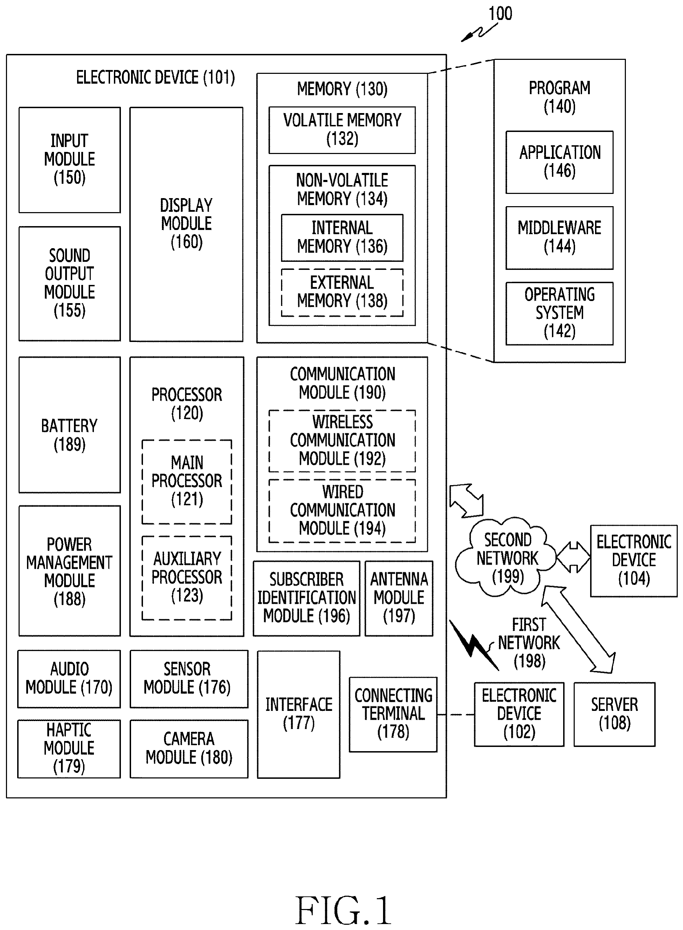

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

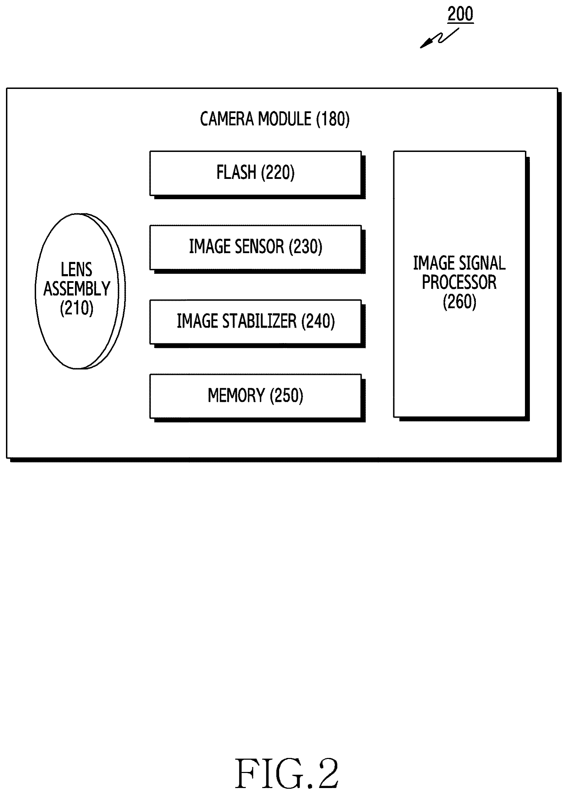

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

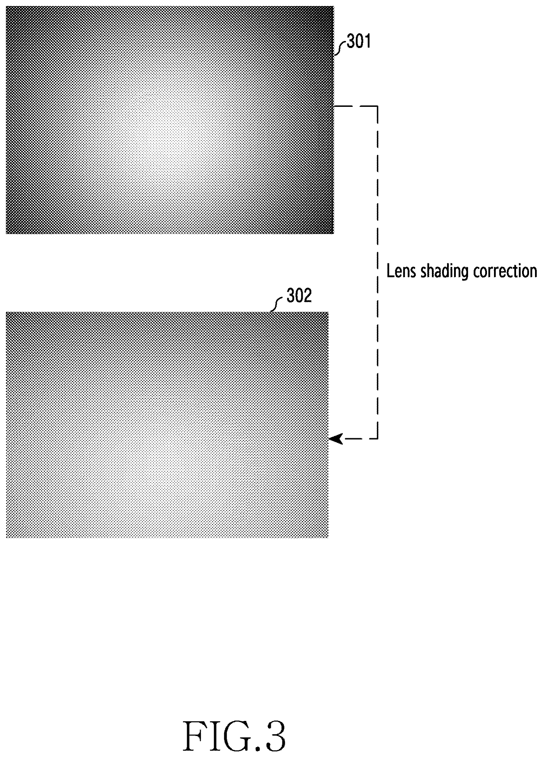

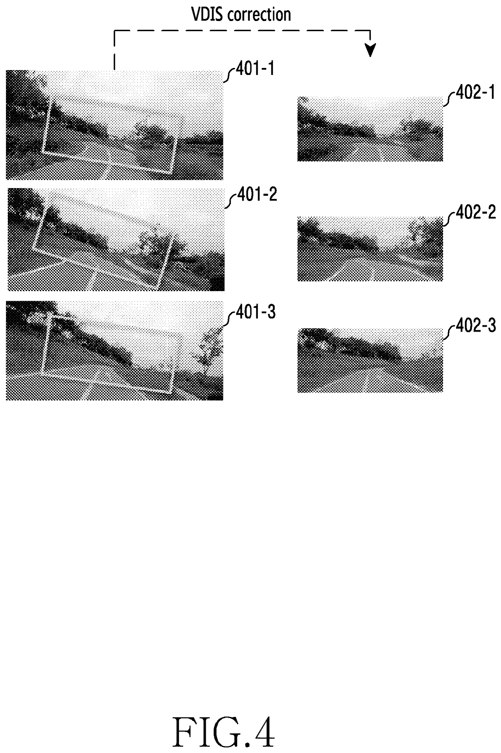

According to an embodiment, an electronic device 101 may generate raw data for generating a raw image via a camera module 180. The camera module 180 according to an embodiment may include an image signal processor 260. The image signal processor 260 according to an embodiment may perform at least one image processing process on a raw image, which is raw data obtained via an image sensor 230. For example, the image signal processor 260 may perform lens shading correction (LSC) and video digital image stabilization (VDIS) correction. The electronic device 101 may provide an image with balanced brightness by compensating for insufficient light in a peripheral part of a captured raw image via lens shading correction. In addition, via VDIS correction, the electronic device 101 may extract a specific area as an output frame from input frames with camera shake in a raw image in consideration of a movement of the electronic device 101, thereby providing an image with little camera shake. In the following description, lens shading correction and VDIS correction will be described in detail with reference to FIG. 3 and FIG. 4, respectively.

FIG. 3 is a diagram illustrating lens shading correction according to an embodiment.

Lens shading refers to a phenomenon in which an image/video becomes darker toward its periphery due to an optical characteristic of a lens. Referring to FIG. 3, a peripheral part of a first image 301 is darker than a center part due to a relatively small amount of light. This may occur due to a decrease in the amount of light in the peripheral part, since the diameter of the image circle of a lens is shorter than the diagonal length of a capture screen. To compensate for a phenomenon in which an image becomes darker toward its peripheral part, the LSC may divide an image into blocks (or pixels) and apply predetermined gain values thereto, thereby reducing a brightness imbalance between a center part and the peripheral part. LSC may be performed by the image signal processor 260, and a higher gain value may be applied to an area that is further from the center (or lens center) of the image to balance the brightness in the image. Referring to FIG. 3, a peripheral part of a second image 302, for which LSC is processed, is identified as being brighter than the peripheral part of the first image 301.

The image signal processor 260 according to an embodiment may divide a raw image into a plurality of blocks (pixels), store gain values for respective blocks in the memory 250, and use the stored gain values when processing LSC. The gain value generally has a larger value toward the peripheral part from the center of the lens.

The image signal processor 260 according to an embodiment may convert a raw image to a format having a raw Bayer pattern, and then perform LSC. A Bayer pattern is a format of image data in which arrangement is performed in an alternating pattern so as to have 50% of G, and 25% of R and B each according to human visual characteristics. The image signal processor 260 according to an embodiment may perform compensation for the brightness of the raw image by multiplying R, G, and B channels by previously stored gain values as they are.

The image signal processor 260 according to an embodiment may perform demosaic after performing LSC. Demosaic refers to a process of inferring an image of three colors again from single-color pixels by using information of surrounding pixels.

In addition, the image signal processor 260 according to an embodiment may adjust a gain value for compensating for the brightness of a peripheral part. The gain value may be determined based on a predetermined ratio. For example, when the predetermined ratio is 100%, the gain value may be a maximum value, so that a degree of brightness compensation may be maximum. The image signal processor 260 according to an embodiment may modify the degree of brightness compensation in an LSC process by adjusting a ratio applied to the gain value.

However, if full brightness compensation is performed (i.e., predetermined ratio of 100%) before demosaic, a difference in information between single-color pixels increases, and noise for an image significantly increases after demosaic. That is, when the LSC is applied to the maximum, the noise may increase at the image's peripheral part and the overall image quality may deteriorate. Therefore, according to an embodiment of the disclosure, the LSC performed before VDIS may not be applied to the maximum, but may be applied in stages. Details of specific embodiments will be described later.

FIG. 4 is a diagram illustrating video digital image stabilization correction according to an embodiment.

Video digital image stabilization (VDIS) correction extracts a specific area from input frames 401-1 to 401-3 with camera shake as output frames 402-1 to 402-3, and generates an output with less camera shake.

The camera module 180 according to an embodiment may use video digital image stabilization (VDIS or DIS). In an embodiment, the camera module 180 may include a method of performing software-based processing on a data output value of the image sensor 230 to perform image stabilization. For example, the camera module 180 may extract a motion vector, based on a difference between image frames (different image) via VDIS (or DIS) which is video digital image stabilization, and may increase sharpness via image processing. In addition, the camera module 180 may extract a motion vector based on an image via VDIS, and may recognize a subject's own motion as a shake in addition to a shake of the electronic device 100.

According to an embodiment, the processor 120 may perform VIDS for image frames, based on movement information or image information of the electronic device 101. The movement information of the electronic device 101 may be obtained from a motion sensor (not illustrated), such as a gyroscope sensor (not illustrated) or an optical image stabilization (OIS) sensor (not illustrated).

According to an embodiment, the processor 120 may crop at least a partial area of an image frame based on the movement information or image information. According to an embodiment, the processor 120 may obtain movement information of the electronic device 101 for each image frame, and may crop a partial area that is changed due to movement for each image frame. For example, the processor 120 may perform VDIS by using a margin area excluding at least partial area from an image frame obtained via the camera module 180. Image frames subjected to VDIS may be understood as image frames from which margin areas are excluded. Second lens shading correction, which will be described later, may be performed on image frames from which margin areas are excluded.

According to an embodiment, the processor 120 may generate a video file including image frames subjected to VDIS. The processor 120 may store the video file in the memory 130 or 250.

In an embodiment, the processor 120 may obtain a degree (or amount) of movement of the electronic device 101 or the camera module 180. For example, based on image frames obtained by the camera module 180 and movement information of the electronic device 101, the camera module 180, or a lens assembly (e.g., lens assembly 210) according to an OIS operation, which is detected by the motion sensor, the processor 120 may calculate/estimate the degree of movement of the electronic device 101 and/or the camera 310.

In an embodiment, the processor 120 may perform a cumulative calculation regarding movement information (e.g., degree of movement) of the electronic device 101 and/or the camera module 180.

In an embodiment, the processor 120 may calculate/estimate a movement path (or movement trajectory) of the electronic device 101 and/or the camera module 180 by using the cumulatively calculated movement information (e.g., movement degree) of the electronic device 101 and/or the camera module 180.

In an embodiment, based on the calculated/estimated movement path (or movement trajectory), the processor 120 may generate a stabilization path (or stabilization trajectory) so that the movement path (or movement trajectory) becomes a smooth path (or trajectory). For example, the processor 120 may estimate a movement path (or movement trajectory) corresponding to an average value of the degree of movement of the electronic device 101 and/or the camera module 180, and may generate the movement path corresponding to the average value of the degree of movement as a stabilization path. The average value is merely an example, and is not limited thereto.

In an embodiment, based on information regarding an image frame that the electronic device 101 is capable of obtaining and movement information, the processor 120 may predict a degree of blur that may occur for each image frame. For example, the processor 120 may calculate/obtain the degree of blur (e.g., amount of blur, size of blur, or probability of occurrence of blur) that may occur for each image frame by using an obtained illumination condition (e.g., exposure value) and the movement information of the electronic device 101, the camera module 180, or the lens assembly (e.g., the lens assembly 210) according to an OIS operation. Blur may occur due to factors such as the shake of the electronic device 101/camera module 180, a focus distance, a shutter speed, whether AF is performed, and whether OIS is performed.

In an embodiment, based on the predicted degree of blur, the processor 120 may configure an image stabilization intensity. For example, the image stabilization intensity may refer to the intensity of performing image stabilization (or shake correction) with respect to image frames in which a movement/shake occurs when the movement of the electronic device 101, the camera module 180, or the lens assembly (e.g., the lens assembly 210) according to an OIS operation occurs in the image frames. In addition, the processor 120 may configure the image stabilization intensity to be lower as the predicted degree of blur increases, and may configure the image stabilization intensity to be higher as the predicted degree of blur decreases.

In an embodiment, based on a previously configured image stabilization intensity and a previously calculated/generated stabilization path (or stabilization trajectory), the processor 120 may generate image frames subjected to image stabilization/VDIS. For example, based on the generated stabilization path, the processor 120 may perform shake correction/image stabilization for an actual movement path according to the image stabilization intensity.

In the above description, each of lens shading correction and video digital image stabilization correction has been described with reference to FIG. 3 and FIG. 4. According to an embodiment, lens shading correction is applied once by applying a gain value based on a predetermined ratio before video digital image stabilization correction is performed. Lens shading correction according to the disclosure may be applied before or after video digital image stabilization correction is performed.

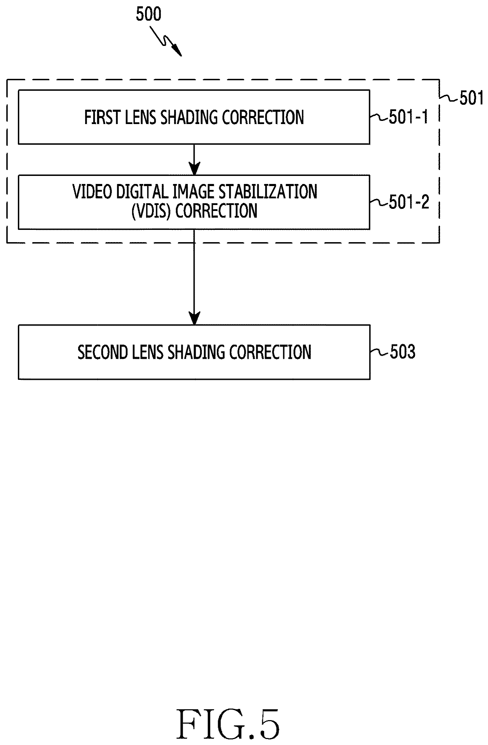

FIG. 5 is a flowchart illustrating an operation method of an electronic device according to an embodiment.

After performing first lens shading correction 501-1, the electronic device 101 according to an embodiment may perform video digital image stabilization correction 501-2 in operation 501.

The first lens shading correction 501-1 according to an embodiment may apply a first LSC table in which first gain values are allocated, to a raw image obtained by the camera module 180, so as to compensate for a difference in brightness between a center part and a peripheral part of the raw image.

The first LSC table may be data in which first gain values are allocated, for each position of an image frame, based on shading profile data. In addition, the first LSC table may be data in which first gain values are allocated based on shading profile data and a first ratio. The first LSC table may include a plurality of blocks arranged in rows and columns, and a position of each block may correspond to a position in an image frame. The first gain values may be allocated to the plurality of blocks, respectively. The shading profile data may be a brightness distribution for each area of an image frame, and may include a brightness value based on a captured image pixel position. The first gain value may have a relatively large value toward the peripheral part from the center part, according to characteristics of a lens.

The first ratio applied to the first gain value may correspond to a correction value smaller than 1. If the first ratio is 1, this means that LSC is applied maximally. In an embodiment of the disclosure, the first ratio corresponds to a correction value smaller than 1 in order to perform lens shading correction before and after video digital image stabilization correction.

The electronic device 101 according to an embodiment may perform second lens shading correction 503 after performing the video digital image stabilization correction 501-2.

According to an embodiment, the second lens shading correction 503 may apply a second LSC table in which second gain values are allocated, to the first corrected image obtained by applying operation 501 to the raw image obtained by the camera module 180, so as to compensate for the difference in brightness between the center part and the peripheral part of the first corrected image.

The second LSC table may be data in which second gain values are allocated for each position of an image frame, based on shading profile data. Unlike the first LSC table, the second LSC table may consider the field of view (FOV) information of an image frame obtained in the VDIS process and sensor position information. This is consideration that an image frame after operation 501 is an image frame from which a partial area is excluded from an image frame for the raw image.

The second LSC table may be data in which second gain values are allocated based on shading profile data and a second ratio. The second LSC table may include a plurality of blocks arranged in rows and columns, and a position of each block may correspond to a position in an image frame. The second gain values may be allocated to the plurality of blocks, respectively.

The second ratio applied to the second gain value may correspond to a correction value smaller than 1, as with the first ratio. The second ratio may be determined in consideration of the first ratio that is a degree of brightness compensation in the first lens shading correction. For example, if the first ratio is 0.6, the second ratio may be 0.4. However, the sum of the first ratio and the second ratio does not necessarily need to be 1.

The shading profile data may represent a ratio of brightness of the center part of each image frame to brightness of any one corresponding point other than the center part. For example, this may represent an area in which brightness of a corresponding point is 95% to 100% of the brightness of a center point, an area in which brightness of a corresponding point is 90% to 95% of the brightness of the center point, an area in which brightness of a corresponding point is 85% to 90% of the brightness of the center point, and an area in which brightness of a corresponding point is less than 85% of the brightness of the center point. The brightness of the corresponding point has a lower ratio as it is farther from the center part.

An image frame obtained by the camera module 180 may have a shading profile in which brightness decreases as a distance from the center point increases. For example, in an area close to the center of the image frame, the brightness may be 95% to 100% of the brightness of the center point, but the brightness may decrease to less than 85% of the brightness of the center point as it is farther from the center point. In an embodiment, at least one lens included in the lens assembly 210 has curvature, so that the amount of light reaching the image sensor 230 may be large as it is near the center, and the amount of light reaching the image sensor 230 may decrease according to the curvature as it deviates from the center. According to an embodiment, the shading profile may be different depending on a position within a field of view of an image frame. In addition, according to an embodiment, the shading profile may be different depending on a wavelength of light reaching the image sensor 230.

According to an embodiment, the shading profile data may be obtained based on a ratio between brightness of areas divided by dividing an image frame into a plurality of areas. According to an embodiment, a shading value of each area included in the shading profile data may be obtained based on a ratio between the brightness of the corresponding area and brightness of a center area.

According to an embodiment, the shading profile data may be obtained by capturing a light source image during a production process of the electronic device 101. The light source image may be an image obtained by capturing a light source. At least one lens included in the lens assembly 210 has curvature, and thus shading may occur due to the lens assembly 210, and the shading profile data may vary based on the curvature of the at least one lens. Therefore, the production process of the electronic device 101 may include a process of calculating a first gain value for each electronic device 101. For example, the first gain value may be slightly different for each electronic device 101.

According to an embodiment, a first gain value (or second gain value) calculated based on the shading profile data may be stored in the memory 130 or 250. The first gain value is not large in capacity and is data obtained in a production process of the camera module 180, and thus may be stored in the memory 250 rather than a main memory of the electronic device 101.

According to an embodiment, the processor 120 may obtain a first gain value 710 from the memory included in the camera module 180 and perform lens shading correction with respect to an image frame. For example, the processor 120 may multiply the image frame by the first gain value. When the processor 120 performs lens shading correction on the image frame using the first gain value, shading caused by the lens assembly 210, which is included in the image frame, may be corrected.

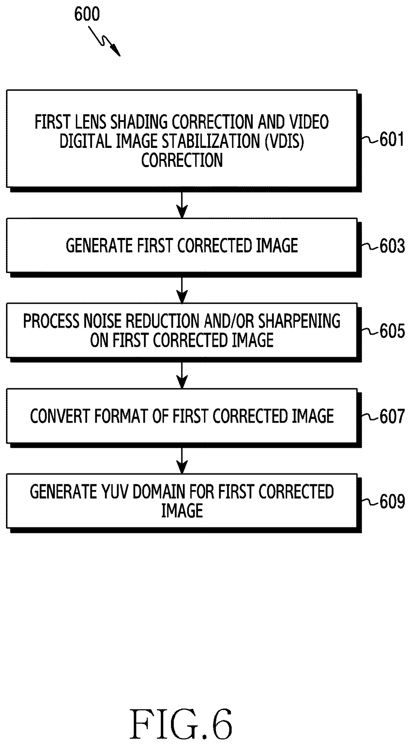

FIG. 6 is a flowchart illustrating a pre-processing process in second lens shading correction according to an embodiment.

As described above, the electronic device 101 according to an embodiment may perform a pre-processing process before second lens shading correction that applies a second LSC table is performed.

The electronic device 101 according to an embodiment may perform video digital image stabilization correction after performing first lens shading correction in operation 601. For the operation, reference may be made to operation 501 described with reference to FIG. 5.

The electronic device 101 according to an embodiment generates a first corrected image in operation 603. The first corrected image is an image in which brightness of a peripheral part of a raw image is compensated via the first lens shading correction, and a partial area of an image frame of the raw image is removed via the VDIS correction.

The electronic device 101 according to an embodiment may perform at least one of noise reduction or sharpening on the first corrected image in operation 605.

The noise reduction process that may be performed by the image signal processor 260 may reduce noise in an image or video. According to an embodiment, the image signal processor 260 may calculate an average value of pixels around the noise and replace data of a corresponding noise pixel with the average value, or find an intermediate value of pixels distributed around the noise and replace the data of the corresponding noise pixel with the intermediate value. This is called 2D-NR or SPATIAL-NR.

As another noise reduction process, 3D-NR (or time-domain-NR) may be used. 3D-NR is a method of distinguishing noise and a signal more clearly based on a plurality of frames, so as to apply noise reduction only to a noise pixel.

However, the noise reduction performed on the first corrected image may cause degradation in the sharpness and detail of the image. That is, intensity of noise reduction and sharpness are in a trade-off relationship. For effective noise reduction, noise needs be reduced while maintaining characteristics of each pixel information obtained from the image sensor 230. Embodiments of the disclosure perform secondary lens shading correction after performing the noise reduction process, in order to maintain pixel information of an image finally obtained, maximally.

The sharpening process that may be performed by the image signal processor 260 may compensate for detail loss caused by the noise reduction process or for clarity loss caused by the limitation of hardware performance, such as a sensor or a lens. The sharpening process may be performed by increasing a difference in signal intensity between adjacent pixels or by reducing a width of a slope of a signal intensity.

The electronic device 101 according to an embodiment may convert a format of the first corrected image in operation 607. The electronic device 101 according to an embodiment may convert the first corrected image in a first format to data in a second format. The electronic device 101 according to an embodiment may convert the first corrected image subjected to the noise reduction or sharpening from an RGB format to a YUV format. For example, the first format may be a Bayer pattern, but is not limited thereto, and the second format may be YUV, Y'UV, YCbCr, YPbPr, or RGB, but is not limited thereto.

Here, Y denotes a luma component or brightness, and UV denotes chrominance components or color information. Luminance may be denoted by Y or Y', and the prime symbol (') may denote gamma compression. Luminance refers to perceptual (color science) brightness, and luma refers to electrical (e.g., voltage of display) brightness (electronic (voltage of display) brightness).

The image signal processor 260 according to an embodiment may perform a method of adjusting (e.g., maintaining or reducing) at least one of color or chrominance components of each pixel included in an input image (or first corrected image) to be processed, considering lens shading correction to be applied to the input image to be processed or brightness of each pixel in the input image to be processed.

The electronic device 101 according to an embodiment may generate a YUV domain for the first corrected image in operation 609. The image signal processor 260 according to an embodiment may convert the first corrected image represented in an RGB domain to a YUV domain. The YUV domain is one of methods of configuring colors, and the second lens shading correction may adjust only a Y value in the YUV domain to minimize noise, thereby compensating brightness.

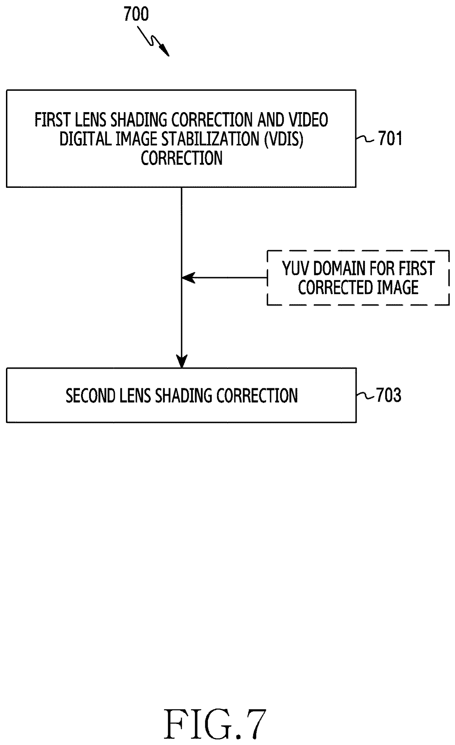

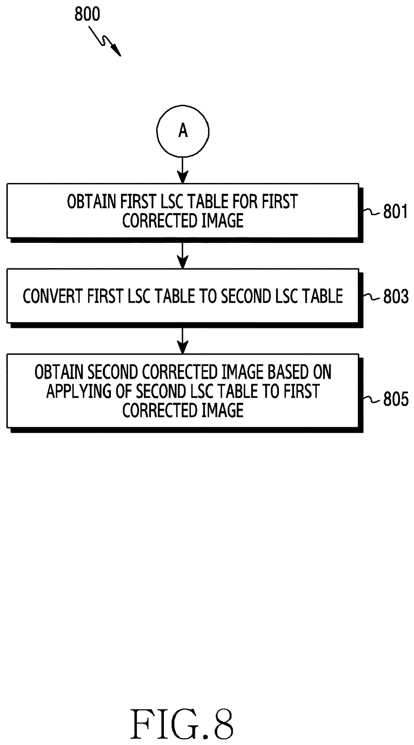

FIG. 7 is a flowchart of an operation method of an electronic device according to an embodiment, and FIG. 8 is a detailed flowchart of second lens shading correction according to an embodiment.

Second lens shading correction according to an embodiment is applied to a first corrected image for which noise reduction and sharpening is completed, in a state in which the first corrected image is converted to a YUV domain. YUV is one of methods of configuring colors, and colors are configured with one luma (Y) and blue chrominance (U) and red chrominance (V) information. The second lens shading correction is applied only to the luminance (Y) to perform brightness compensation, and thus compensation for the brightness may be performed with less noise than when only first lens shading correction is performed.

The electronic device 101 according to an embodiment may perform video digital image stabilization correction after performing first lens shading correction in operation 701.(701). For the operation, reference may be made to operation 501 described with reference to FIG. 5.

The electronic device 101 according to an embodiment may use a YUV domain of a first corrected image obtained via operations 600 according to FIG. 6, in order to perform second lens shading correction in operation 703 (refer to 503 in FIG. 5).

The electronic device 101 according to an embodiment obtains a first LSC table for a first corrected image for the second lens shading correction in operation 801. The first LSC table may be data in which first gain values are allocated based on shading profile data and a first ratio. The first LSC table includes information associated with the first ratio, and thus the electronic device 101 according to an embodiment may determine a second ratio necessary for the second lens shading correction, in consideration of the first ratio.

The electronic device 101 according to an embodiment may convert the first LSC table to a second LSC table in operation 803. Second gain values of the second LSC table are determined based on the second ratio associated with the first ratio. In addition, the number of the second gain values (the number of blocks) of the second LSC table is necessarily smaller than the number of the first gain values of the first LSC table. This is because a partial area of an image frame is removed via VDIS correction. That is, second gain values corresponding to a crop area may be allocated to the second LSC table. In addition, tonemapping may be processed for the second LSC table.

Based on applying the second LSC table to the first corrected image, the electronic device 101 according to an embodiment may obtain a second corrected image in operation 805. The electronic device 101 according to an embodiment may apply, to each frame of the first corrected image, the second LSC table in which the second gain values corresponding to the crop area are allocated.

The electronic device 101 according to an embodiment may adjust, based on a second gain value, a Y value of the first corrected image that is converted to a YUV domain. The electronic device 101 according to an embodiment may generate the second corrected image with the adjusted Y value. In this case, the electronic device 101 according to an embodiment may store the first corrected image together with the second corrected image in the memory 130 or 250.

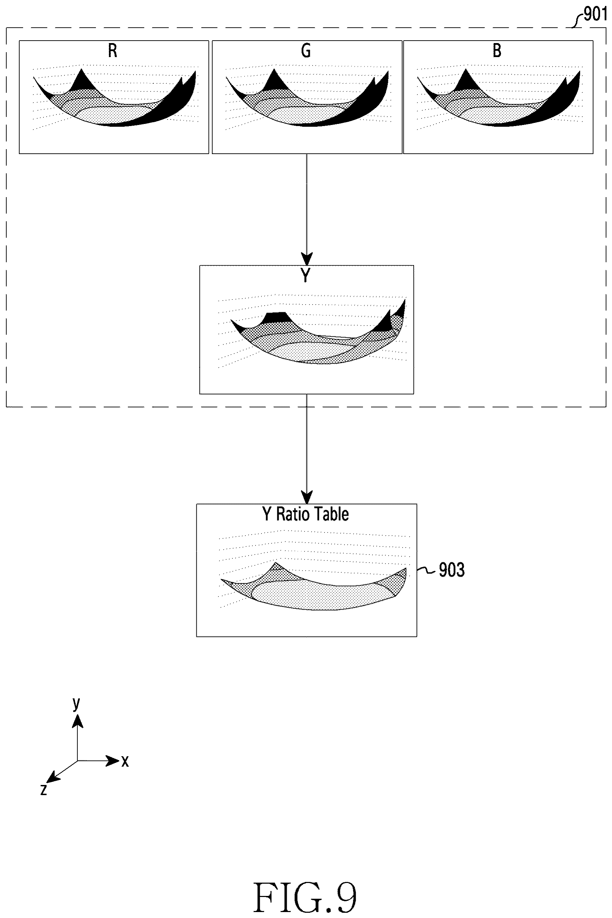

FIG. 9 is a diagram illustrating a process of generating a second LSC table according to an embodiment.

A first LSC table 901 according to an embodiment may include a color-based parameter for calculating a gain value for each color. In this instance, the color-based parameters may be expressed as a three-dimensional gain curved-surface as illustrated in FIG. 9, and a geometric form of the gain curved-surface may be determined by a parametric method, a non-parametric method, or a combination of the parametric and non-parametric methods. The non-parametric method is a method of expressing a curve using a domain (domain (of definition)) of the curve or a function value of a part thereof, so as to define the shape of the curve. If a value of the curve expresses only a part of the domain, a remaining value of the curve may be calculated by interpolating a value(s) defined around the part in various methods.

For example, a first gain value may include a red gain value for red color correction, a green gain value for green color correction, and a blue gain value for blue color correction. For example, the first gain value may include a cyan gain value for cyan color correction, a yellow gain value for yellow color correction, and a magenta gain value for magenta color correction, but is not limited thereto.

A second LSC table 903 according to an embodiment may include a Y parameter for adjusting brightness of a first corrected image. The Y parameter corresponds to a value determined by a second ratio. A first ratio of first lens shading correction and a second ratio of second lens shading correction may be in a compensation relationship with each other. For example, when the first ratio is 0.4, the second ratio may be 0.6. The second LSC table 903 may configure, for each frame, a valid Y parameter region (Z-X plane) based on a crop area determined by VDIS.

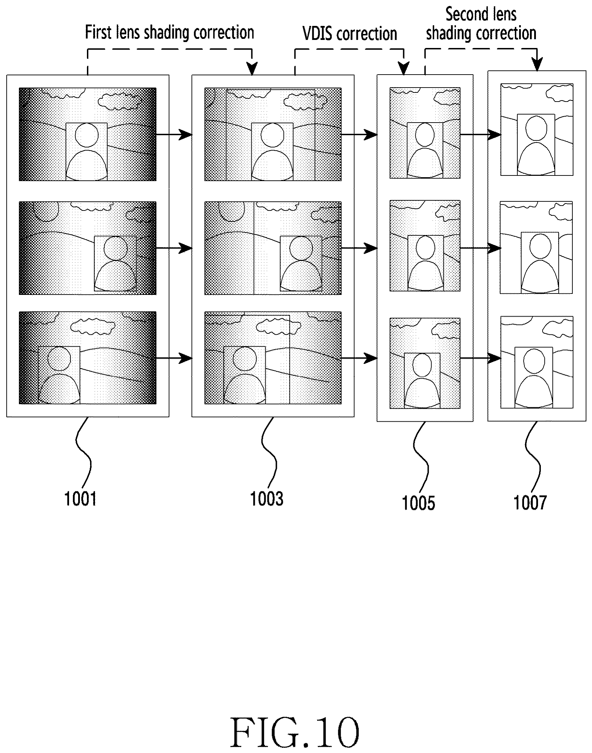

FIG. 10 illustrates an example in which first lens shading correction, VDIS correction, and second lens shading correction are sequentially processed in an electronic device according to an embodiment.

Referring to FIG. 10, a raw image 1001 according to an embodiment is obtained via the image sensor 230. As illustrated, the raw image 1001 has a characteristic in which a peripheral part of each frame is darker than a center part due to lens shading.

First lens shading correction according to an embodiment may convert the raw image 1001 to a corrected image 1-1 1003 of which brightness of a peripheral part is compensated. In addition, VDIS correction according to an embodiment may convert the correction image 1-1 1003 to a correction image 1-2 1005 corresponding to a partial area cropped from a frame. The correction image 1-2 1005 referred to in FIG. 10 is the same as the first corrected image subjected to image processing in operation 501 of FIG. 5.

The second lens shading correction according to an embodiment may convert the correction image 1-2 1005 to a second corrected image 1007 in which brightness of a peripheral part is compensated. Based on a second gain value based on a second ratio within the area cropped via VDIS correction, the second lens shading correction may adjust only a Y value in the YUV domain of the first corrected image so as to minimize noise.

An electronic device according to an embodiment may include a camera module including a lens assembly, a motion sensor configured to detect a movement of the electronic device, and at least one processor electrically connected to the camera module and the motion sensor. The at least one processor according to an embodiment may be configured to obtain a raw image including a plurality of pixels from the camera module, to perform first lens shading correction by applying, to the raw image, a first LSC table in which first gain values respectively corresponding to the plurality of pixels are allocated, and to generate, based on the movement of the electronic device, a first corrected image subjected to video digital image stabilization (VDIS) correction. The at least one processor according to an embodiment may be configured to perform second lens shading correction by applying, to the first corrected image, a second LSC table in which second gain values corresponding to at least a portion of the plurality of pixels are allocated, and to generate a second corrected image subjected to the second lens shading correction.

The camera module according to an embodiment may further include a memory for storing shading profile data for the first lens shading correction and the second lens shading correction. The at least one processor according to an embodiment may be configured to determine the first gain values, based on the shading profile data corresponding to a brightness distribution of the raw image and a first ratio, and to determine the second gain values, based on a second ratio associated with the first ratio.

The at least one processor according to an embodiment may be configured to obtain a crop area for the VDIS correction for each frame in the raw image, and to apply, for each frame of the first corrected image, the second LSC table in which second gain values corresponding to the crop area are allocated.

The camera module according to an embodiment may further include an image signal processor configured to perform image processing on an image stored in the memory. The at least one processor according to an embodiment may be configured to control the image signal processor to perform at least one of noise reduction or sharpening on the first corrected image.

The at least one processor according to an embodiment may be configured to convert the first corrected image subjected to the noise reduction or the sharpening from an RGB format to a YUV format.

At least one processor according to an embodiment may be configured to adjust, based on the second gain value, a Y value of the converted first corrected image.

The at least one processor according to an embodiment may be configured to store, in the memory, the second corrected image together with the first corrected image.

An operation method of an electronic device according to an embodiment may include an operation of obtaining a raw image including a plurality of pixels from the camera module, an operation of performing first lens shading correction by applying, to the raw image, a first LSC table in which first gain values respectively corresponding to the plurality of pixels are allocated, and an operation of generating, based on a movement of the electronic device, a first corrected image subjected to video digital image stabilization (VDIS) correction. The operation method of the electronic device according to an embodiment my include an operation of performing second lens shading correction by applying, to the first corrected image, a second LSC table in which second gain values corresponding to at least a portion of the plurality of pixels are allocated, and an operation of generating a second corrected image subjected to the second lens shading correction.

The operation method of the electronic device according to an embodiment may further include an operation of determining the first gain values based on shading profile data corresponding to a brightness distribution of the raw image and a first ratio, and an operation of determining the second gain values, based on a second ratio associated with the first ratio.

The operation method of the electronic device according to an embodiment may further include an operation of obtaining a crop area for the VDIS correction for each frame in the raw image, and an operation of applying, for each frame of the first corrected image, the second LSC table in which second gain values corresponding to the crop area are allocated.

The operation method of the electronic device according to an embodiment may further include an operation of performing at least one of noise reduction or sharpening on the first corrected image.

The operation method of the electronic device according to an embodiment may further include an operation of converting the first corrected image subjected to the noise reduction or the sharpening from an RGB format to a YUV format.

The operation method of the electronic device according to an embodiment may further include an operation of adjusting, based on the second gain value, a Y value of the converted first corrected image.

The operation method of the electronic device according to an embodiment may further include an operation of storing, in the memory, the second corrected image together with the first corrected image.

## Claims

1. An electronic device comprising:
a camera module;
a motion sensor configured to detect a movement of the electronic device; and
at least one processor electrically connected to the camera module and the motion sensor,
wherein the at least one processor is configured to:
obtain a raw image comprising a plurality of pixels from the camera module;
perform first lens shading correction by applying, to the raw image, a first LSC table in which first gain values corresponding to the plurality of pixels respectively are allocated;
based on a movement of the electronic device, generate a first corrected image which has been subjected to video digital image stabilization (VDIS) correction; and
perform second lens shading correction by applying, to the first corrected image, a second LSC table in which second gain values corresponding to at least some of the plurality of pixels are allocated, and generate a second corrected image which has been subjected to the second lens shading correction.

2. The electronic device of claim 1, wherein the camera module further comprises a memory storing shading profile data for the first lens shading correction and the second lens shading correction, and
wherein the at least one processor is configured to:
determine the first gain values, based on the shading profile data corresponding to a brightness distribution of the raw image and a first ratio; and
determine the second gain values, based on a second ratio associated with the first ratio.

3. The electronic device of claim 2, wherein the at least one processor is configured to:
obtain, for each frame, a crop area for the VDIS correction in the raw image; and
apply, to each frame of the first corrected image, the second LSC table in which second gain values corresponding to the crop area are allocated.

4. The electronic device of claim 2, wherein the camera module further comprises an image signal processor configured to perform image processing of an image stored in the memory, and
wherein the at least one processor is configured to control the image signal processor to perform at least one of noise reduction or sharpening of the first corrected image.

5. The electronic device of claim 4, wherein the at least one processor is configured to convert the first corrected image, which has been subjected to the noise reduction or the sharpening, from an RGB format to a YUV format.

6. The electronic device of claim 5, wherein the at least one processor is configured to, based on the second gain values, adjust a Y value of the converted first corrected image.

7. The electronic device of claim 2, wherein the at least one processor is configured to store the second corrected image, together with the first corrected image, in the memory.

8. An operation method of an electronic device comprising a camera module, the method comprising:
obtaining a raw image comprising a plurality of pixels from the camera module;
performing first lens shading correction by applying, to the raw image, a first LSC table in which first gain values corresponding to the plurality of pixels respectively are allocated;
based on a movement of the electronic device, generating a first corrected image which has been subjected to video digital image stabilization (VDIS) correction;
performing second lens shading correction by applying, to the first corrected image, a second LSC table in which second gain values corresponding to at least some of the plurality of pixels are allocated; and
generating a second corrected image which has been subjected to the second lens shading correction.

9. The method of claim 8, further comprising:
determining the first gain values, based on shading profile data corresponding to a brightness distribution of the raw image and a first ratio; and
determining the second gain values, based on a second ratio associated with the first ratio.

10. The method of claim 9, further comprising:
obtaining, for each frame, a crop area for the VDIS correction in the raw image; and
applying, to each frame of the first corrected image, the second LSC table in which second gain values corresponding to the crop area are allocated.

11. The method of claim 9, further comprising:
performing at least one of noise reduction or sharpening of the first corrected image.

12. The method of claim 11, further comprising:
converting the first corrected image, which has been subjected to the noise reduction or the sharpening, from an RGB format to a YUV format.

13. The method of claim 12, further comprising:
based on the second gain values, adjusting a Y value of the converted first corrected image.

14. The method of claim 8, further comprising:
storing the second corrected image, together with the first corrected image, in the memory.
